Europäisches Patentamt

European Patent Office

Office européen des brevets

(11) Publication number: **0 236 944 B1**

## EUROPEAN PATENT SPECIFICATION

(45) Date of publication of patent specification: **30.12.92**

(51) Int. Cl.5: **H04N 5/781**, H04N 5/93, H04N 5/76, H04N 9/87

(21) Application number: **87103110.0**

(22) Date of filing: **05.03.87**

(54) **Method and system for playing back information recorded on a recording disk.**

(30) Priority: **06.03.86 JP 49779/86**
**31.10.86 JP 260422/86**

(43) Date of publication of application:
**16.09.87 Bulletin 87/38**

(45) Publication of the grant of the patent:
**30.12.92 Bulletin 92/53**

(84) Designated Contracting States:
**DE FR GB**

(56) References cited:
**EP-A- 0 125 019**
**US-A- 4 403 259**

**PATENT ABSTRACTS OF JAPAN, vol. 10, no. 30 (P-426)(2087), 5th February 1986; & JP-A- 60 179 945 (SONY K.K.) 13-09-1985**

**PATENT ABSTRACTS OF JAPAN, vol. 7, no. 202 (P-221)(1347), 7th September 1983; & JP-A- 58 98881 (YUNIBAASURA K.K.) 11-06-1983**

(73) Proprietor: **PIONEER ELECTRONIC CORPORA-TION**
**No. 4-1, Meguro 1-chome**
**Meguro-ku Tokyo 153(JP)**

(72) Inventor: **Kojima, Shin-ichi**
**2610, Hanazono 4-chome**
**Tokorozawa-city Saitama(JP)**
Inventor: **Okano, Takashi**
**2610, Hanazono 4-chome**
**Tokorozawa-city Saitama(JP)**

(74) Representative: **Dipl.-Phys.Dr. Manitz**
**Dipl.-Ing., Dipl.-W.-Ing. Finsterwald Dipl.-Ing.**
**Grämkow Dipl.-Chem.Dr. Heyn Dipl.-Phys.**
**Rotermund**
**Morgan, B.Sc.(Phys.) Robert-Koch-Strasse 1**
**W-8000 München 22(DE)**

Rank Xerox (UK) Business Services

# Description

The present invention relates to a method and a system for playing back information recorded on a record disk on which recording is performed while the linear velocity is made almost constant over the recording area of the record disk, said method using a pickup device having an information reading point and a memory device having a memory capacity for recording information corresponding to at least one field of a video signal.

Video disks for recording video information have such a construction that recesses called "pits" (or protrusions) are provided so as to form concentric recording tracks or a spiral recording track on the disk surface. The recording information is carried by the length and the interval of such pits or protrusions.

From the video disk having such a construction, the information recorded thereon can be picked up by light, and the information is reproduced, for example, by demodulating a pickup signal obtained by a light beam reflected or transmitted from the recording surface of the record disk which is modulated by the presence or absence of the pits. In the pickup device for picking up information from this type of a record disk, a tracking servo system is provided for driving a tracking actuator so that the information reading point of the pickup device traces the information recording track on the recording disk accurately at all times. Generally such a reading operation of an information reading system consists of a normal playback operation by which frames of the video information, each of which includes two fields of video signal, are read out in order, and special playback operations such as a still picture playback operation in which the same frame of the video information is read out repeatedly. The special playback operations such as the still picture playback operation, the slow speed playback operation, and the fast speed playback operation, are enabled by controlling the jump of the information reading point. A method is utilized in which the tracking servo loop is opened and the tracking actuator is forcibly driven at the same time, so that the information reading point is moved from the recording track onto which the information reading point was directed, and subsequently the information reading point is brought to another recording track portion which is to be traced, and the servo loop is closed again.

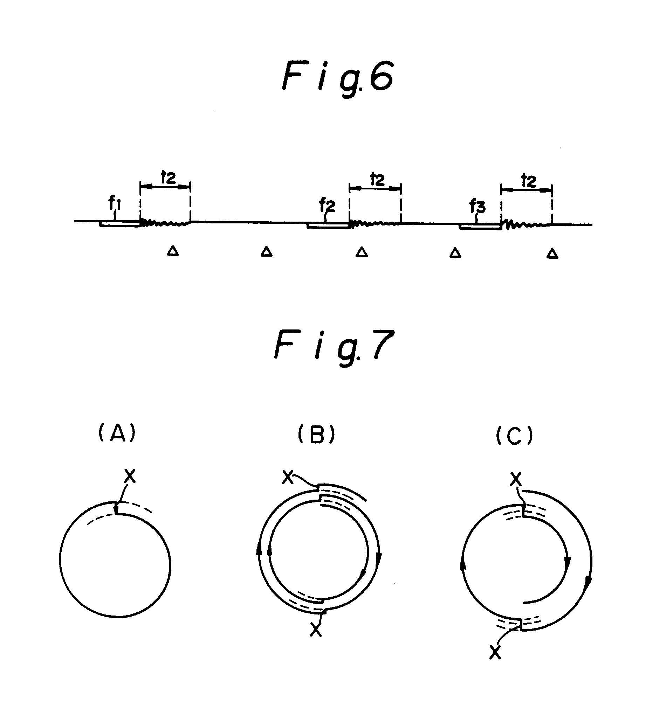

On the other hand, information record disks can be CAV (constant angular velocity) type disks on which information is recorded so that the reading of the information is performed while the disk is rotated at a constant angular velocity, and CLV type disks on which the information is recorded so that the reading of the information is to be performed while the disk is rotated so that the linear velocity is constant. In the case of CAV type disks, any circumferential section of the recording track at any radial position of the disk carries a constant amount of information, e.g. the video information of one frame. Therefore, portions of the recording track, on which information corresponding to vertical synchronizing signals is disposed between two adjacent frames, are aligned on a line which extends in the radial direction of the record disk. Therefore, with CAV type video disks, the synchronizing signal of the video signal is regularly reproduced even immediately after a track jump operation which is essential for the special playback operations. That means that special playback operations can be performed satisfactorily without any difficulty. Fig. 7 shows examples of the movement of the information reading point when several special playback operations are performed with the CAV type video disk in which two fields of the video information are recorded for each one revolution of the disk. As shown, the track jump operation is performed at portions (x) of the recording track in which the vertical synchronizing signal between two fields of the video information is recorded, in any of the examples, i.e. a still picture playback operation schematically depicted at the figure (A), and a three times fast speed playback operation in the forward direction schematically depicted at the figure (B), and a three times fast speed playback operation in the reverse direction schematically depicted at the figure (C).

However, in the case of CLV type disks, the amount of information recorded during one revolution of the disk, i.e. in one circumferential track portion, differs depending on the radial position of the record disk. In other words, the ratio between the period of one revolution of the disk and the period of one field of the video signal is not maintained at an integer. For example, video information of one frame is recorded in the innermost recording track section while video information of three frames is recorded in the outermost recording track section. Therefore, with the CLV type disks, the generation of the synchronizing signal will be disturbed for the video signal obtained immediately after a track jump operation. Thus, it is difficult to maintain the continuity of the video signal to obtain a satisfactory reproduction picture if the track jump operation, which is essential for the special playback operation, is performed. In order to solve this problem, it was considered to record the read out video signal in a video memory, and to use, as a playback video signal, the video signal read out from the video memory by controlling the read address so as to maintain the regularity of the synchronizing signal.

However, this can not be performed easily because of the following reasons. In systems for playing back information recorded on a recording disk, a CCD (charge coupled device) is provided for controlling a spindle motor which rotates the recording disk, and for the purpose of the time base correction. The frequency of a clock signal to be supplied to the CCD is varied in accordance with a phase difference between an output signal of a synchronizing signal separator, which separates synchronizing signals from a playback video signal, and an output signal of a reference oscillator. By this control of the frequency of the clock signal, the output signals of the synchronizing signal separator and the reference oscillator are synchronized in phase. However, in the case of CLV type disks, since the positions of the synchronizing signal is not aligned in the radial direction, a non constant phase error occurs between the output signal of the synchronizing signal separator and the reference oscillator in association with the track jump operation. This means that a certain time period is required before the phase of the playback video signal presents a predetermined relation with the phase of the output signal of the reference oscillator. Moreover, when the information reading point in the radial direction of the disk is moved by a track jump operation in a short time in a CLV type disk, a transient response of the CCD and the spindle motor occurs in order to maintain the linear velocity. Therefore, another time is required for stabilizing this transient response.

As an example of a technique for decreasing the time base error associated with the track jump operation of a CLV type disk, a method is proposed by the inventors of the present application and described in a Japanese Patent Application JP-A-58 098 881. However, even with this method, a time period varying from several milli seconds to ten milli seconds is required in order to absorb the time base error completely. Therefore, it becomes necessary to provide an additional device for correcting the time base error of the signal read out from the memory in order to eliminate the disturbance of the synchronizing signal during a special playback mode or another device for correcting this disturbance before the writing of the video signal in the memory is required separately. Thus, there has been a problem that the construction of the information playback system becomes complicated.

It is accordingly an object of the present invention to further modify the method and the system for playing back information from a record disk on which recording is performed while the linear velocity is made almost constant over the recording area of the disk so, that time base error perturbations after a respective track jump operation are eliminated. Moreover, the method and system should be simple and reliable in use.

In order to satisfy this object the method of the present invention is characterized by the following steps:

moving said information reading point of said pickup device by a track jump operation in a radial direction of said record disk repeatedly at intervals of N times of rotation of said record disk across M recording tracks on said record disk, in response to a command of a special playback operation, with N being a natural number and M being a multiple of N including N;

writing portions of information picked up by said pickup device during periods between each of said track jump operations into said memory device, in the order of reading by said pickup device; and

reading information stored in said memory device in succession, to provide playback information for said special playback operation, wherein said step for moving said information reading point of said pickup device is operative to move said information reading point by said track jump operation to a position of said recording track before a point from which reading of the video signal to be stored in the memory device starts, by a predetermined distance corresponding to at least a time period required for stabilizing a time base error of said information caused by said track jump operation.

In this way the operation of the time base servo system is stabilized before the information which is to be written into the memory is picked up after a track jump operation. Thus, the time base error is eliminated from the playback video signal. A separate time base servo circuit is not necessary. As a video signal having a stable time base is available from the memory, a reliable performance of the operation of special playback modes is ensured.

A particularly preferred embodiment is characterized by a further step for determining a direction of said movement of said information reading point of said pickup device in said radial direction of said record disk, according to said command for said special playback operation.

A further expedient embodiment of the invention is characterized in that said special playback operation is a still picture playback operation, and in that said step for moving said information reading point of said pickup device moves back said information reading point across N recording tracks by said track jump operation repeatedly at intervals of N times of rotation of said record disk.

Another advantageous embodiment of the invention is characterized in that said special playback operation is a K times fast speed forward playback operation, with K being a natural number, and in that said step for moving said information reading point of said pickup device moves said information reading point in a forward direction across N (K + 1) recording tracks by said track jump operation repeatedly at intervals of N times of rotation of said repeatedly at intervals of N times of rotation of said record disk, and in that said reading step is performed while said portions of said information are written by said writing step.

A further expedient embodiment of the present invention is characterized in that said special playback operation is a K times fast speed reverse playback operation, with K being a natural number, and in that said step for moving said information reading point of said pickup device moves said information reading point in a reverse direction across N (K - 1) recording tracks by said track jump operation repeatedly at intervals of N times of rotation of said record disk, and in that said reading step is performed while said portions of said information picked up by said pickup device are written by said writing step.

Another advantageous embodiment of the present invention is characterized in that said number N is varied according to said position of said information reading point of said pickup device in said radial direction of said information record disk.

In order to satisfy the above mentioned object the system according to the present invention is characterized by means for moving said information reading point of said pickup device by a track jump operation in a radial direction of said record disk repeatedly at intervals of N times of rotation of said recording disk across M recording tracks on said record disk, in response to a command of a special playback operation, with N being a natural number and M being a multiple of N including N; means for writing portions of information picked up by said pickup device during periods between each of said track jump operations, into said memory device, in the order of reading by said pickup device; and means for reading information stored in said memory device in succession, to provide playback information for said special playback operation, wherein said means for moving said information reading point of said pickup device moves said information reading point by said track jump operation to a position of said recording track before a point from which reading of the video signal to be stored in the memory device starts, by a predetermined distance corresponding to at least a time period required for stabilizing a time base error of said information caused by said track jump operation.

Fig. 1 is a black diagram of an information playback system in which the information playback method and system according to the present invention are embodied;

Figs. 2 and 3 are diagrams showing the operation of the system shown in Fig. 1;

Fig. 4 is a block diagram of an information playback system in which a second embodiment of the the present invention is applied;

Fig. 5 is a flowchart showing the operation of the system shown in Fig. 4;

Fig. 6 is a diagram showing a function of the system of Fig. 4; and

Fig. 7 is a schematic illustration of the track jump operation for special playback operations in the case of the CAV type video disk.

The embodiments of the present invention will be described with reference to the accompanying drawings.

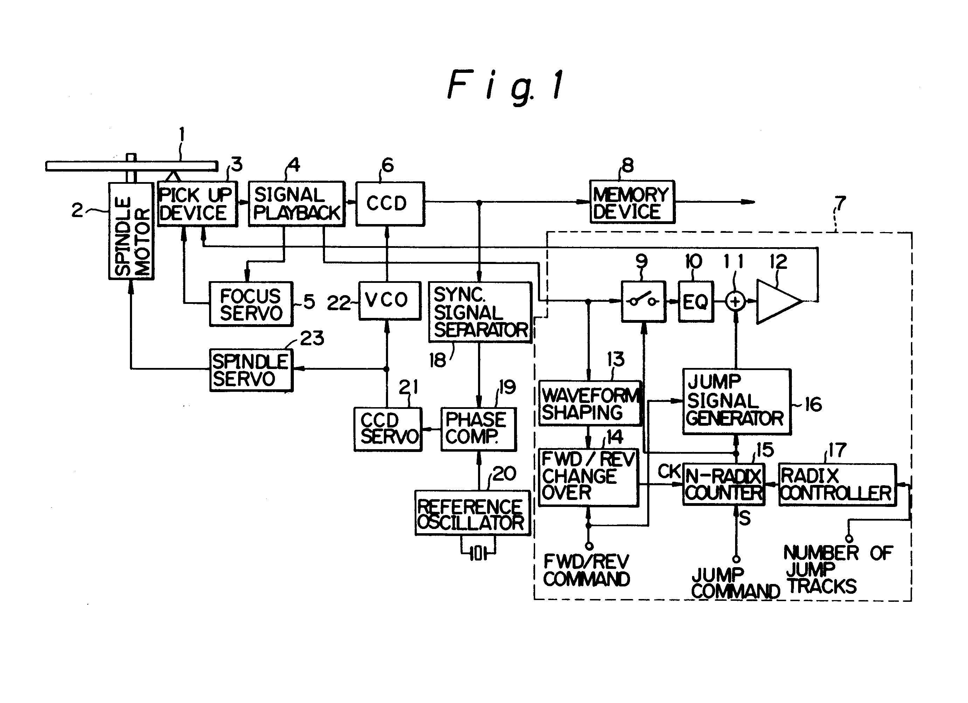

In Fig. 1, information recorded on a recording disk 1 which is rotated by a spindle motor 2 is picked up by means of an optical pickup device 3. The pickup device 3 includes various components such as a laser diode, an objective lens, a focus actuator, a tracking actuator, and a photo detector. An output signal of the pickup device 3 is supplied to a signal playback circuit 4. The signal playback circuit 4 is made up of such circuit elements as an RF amplifier, an amplifier for generating servo error signals, and a demodulator. With these circuit elements, the signal playback circuit 4 demodulates the input signal to a video signal, and at the same time, generates various error signal for controlling various servo control operations.

The various error signals generated by this signal playback circuit 4 are supplied to a focus servo circuit 5 and a tracking servo circuit 7. The focus servo circuit is constructed to drive the focus actuator in the pickup device 3 in response to a focus error signal. On the other hand, a playback video signal supplied from the signal playback circuit 4 is supplied to a memory device 8 and a synchronizing signal separator 18 through a CCD 6 for the time base error correction. The memory device 8, for example, includes a memory having a memory capacity for storing two frames of video signal, and a control circuit for operating an address control of the memory.

A synchronizing signal is separated from the playback video signal by the synchronizing signal separator 18, and is compared with a reference signal generated by a reference oscillator 20 at a phase comparator 19. This phase comparator 19 provides a signal corresponding to a phase difference between the synchronizing signal of the playback video signal and the reference signal. This signal generated by the phase comparator 19 is supplied to a CCD servo amplifier 21. An output signal of this CCD servo amplifier 21 operates as a control signal of a VCO (voltage controlled oscillator) and operates as a drive signal of the spindle motor 2 after passing through a spindle servo amplifier 23. An output signal of the VCO 22 is supplied to the CCD 6 as a clock input signal. By the change in the oscillation frequency of the VCO 22 in accordance with the phase difference between the synchronizing signal of the playback video signal and the reference signal, the signal delay time of the CCD 6 varies. As a result of these operations, the rotational speed of the spindle motor 2 and the signal delay time of the CCD 6 are controlled so that the phase of the synchronizing signal of the playback video signal and the phase of the reference signal become equal to one another.

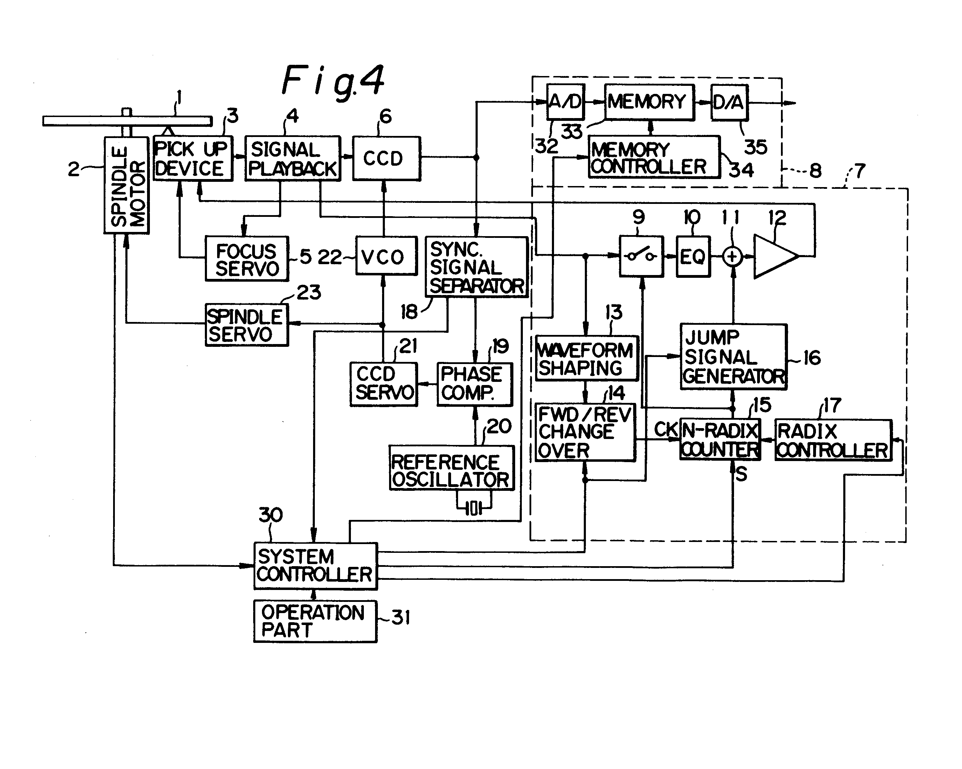

In the tracking servo circuit 7, the tracking error signal is supplied to an equalizer amplifier 10 through a loop switch 9 so that a phase compensation is effected, and supplied to an adder circuit 11 as an input signal thereof. An output signal of the adder circuit 11 is supplied to the tracking actuator in the pickup device 3, so that the information reading point of the pickup device 3 accurately traces the recording track. At the same time, the tracking error signal is converted to a pulse form signal at a waveform shaping circuit 13, and in turn supplied to an FWD/REV change over circuit 14 which effects a phase inversion of the pulse form signal in response to a FWD(forward)/REV(reverse) playback command. This circuit 14 is provided for equalizing the tracking error signal in the forward direction and the tracking error signal in the reverse direction because the phase of the tracking signal differs by 180° between the forward and reverse direction of the tracking error. An output pulse signal of the FWD/REV change over circuit 14 is supplied to a counter 15 as a clock input signal thereof. The counter 15 is a variable radix (base) type counter which starts the count operation in response to a jump command signal supplied from outside and the radix of which is changed by an external control signal. The radix of the counter 15 is controlled so that it operates as an N-radix notation counter, and for example, produces a high level output signal until N pulses are received after the start of the count operation. By the output signal of this counter 15, an on-off control of the loop switch 9 is performed and a jump signal generating circuit 16 is activated to generate a drive signal for the track jump operation. The jump signal generating circuit 16 is constructed to generate the drive signal having a polarity determined by the FWD/REV commanded signal, depending on the FWD or REV condition. The drive signal generated by this jump signal generating circuit 16 is supplied to the adder circuit 11, in order to forcibly drive the tracking actuator in the pickup device 3. An output signal of a radix control circuit 17 is supplied to the counter 15 as a radix control signal. The radix control circuit 17 is constructed to generate a control signal which corresponds to a number obtained by adding a specific number to the number of the jump tracks which is indicated by a data supplied from a control part (similar to the system controller 30 shown in Fig. 4). Preferably, this number of the jump tracks is varied by the control part in accordance with the position of the information reading point in the radial direction of the record disk 1.

In the information playback system having the above explained construction, it is assumed that the tracking servo loop switch 9 is closed, and a normal playback operation is taking place with the normal operation of the tracking servo system. Under this condition, if a still picture playback operation is designated by an operator (user), and jump command signals are generated by the control part (not shown) at predetermined times within the vertical fly-back signal blanking period, and at the same time, the number of recording tracks in which two frames of video information for example is recorded is issued as a data indicative of the number of recording tracks for the jump operation, then the counter 15 is operated as N-radix notation counter by the operation of the radix control circuit 17, and the output signal of the counter 15 turns to the high level. Under this condition, the loop switch 9 is opened and the drive signal having a polarity suited for the normal or reverse direction of the track jump operation is issued from the jump signal generating circuit 16. As a result, the tracking actuator in the pickup device 3 is forcibly operated, and the information reading point is jumped from the present track to adjacent tracks in turn. Further, a pulse signal is produced at the waveform shaping circuit 13 every one track jump movement of the information reading point. This pulse signal is supplied to the counter 15 as the clock input signal. Therefore, the count value of the counter 15 reaches N when the pulse signal is generated N times, and the output signal of the counter 15 turns to the low level. Therefore, the servo loop switch 9 is closed and at the same time the generation of the drive signal is stopped and the normal reading operation will be started.

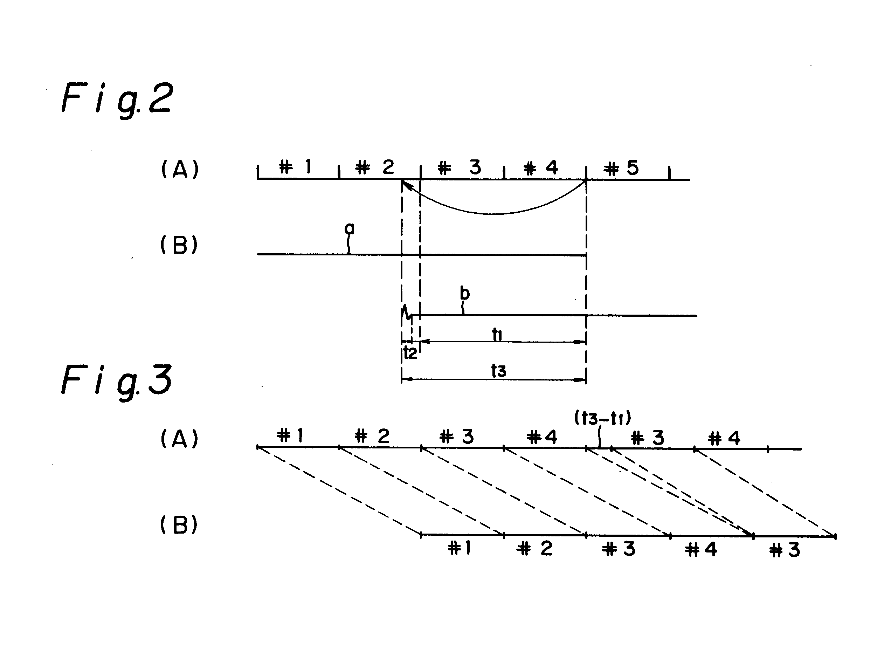

Referring to Fig. 2, the operation will be further explained. With a recording disk on which frames from #1 through #5 are in turn recorded as shown in Fig. 2A, if a still picture playback operation of frames #3 and #4 is generated during the time of playback of the frame #4, the information reading point is moved by the jump operation to a position just before (this side of) the frame #3 in accordance with the operation of the radix control circuit 17, as indicated by the arrow in Fig. 2A. By the operation of the radix control circuit 17, the time period $t_3$ required for picking up the information of the portion, over which the information reading point is moved by the track jump operation, can be determined to be longer than the sum of a time period $t_1$ for picking up the information of the two frames #3 and #4, and a time period $t_2$ required for the time base servo circuit to be stabilized into a locked state. With this operation, if no time base error was present before the track jump operation as shown by the solid line a in Fig. 2 (B), and the time base error was present from just after the track jump operation for the time period t2 as shown by the solid line b in Fig. 2 (B), the time base servo system will be stabilized before the time period $t_1$ for picking up the information of the two frames #3 and #4, to present no time base error. On the other hand, the information playback system is constructed so that the video signal corresponding to two frames is recorded once in the memory device 8, and in turn read out therefrom, and the next video signal is in turn recorded into the memory device 8, at each address from which the recorded video signal has been read out. Therefore, if the video signal corresponding to frames from the frame #3 on is recorded into the memory device 8 after a track jump operation, reproduction of a still picture having a good quality is enabled by the video signal read from the memory device 8 because the video signal corresponding to frames #3 and #4 which is recorded into the memory device after the track jump operation has no time base error. Moreover, since the video signal of two frames is played back repeatedly, the phase of the color sub carrier signal is not disturbed immediately after the track jump operation. Thus, a stable color reproduction become possible.

In addition, as shown in Fig. 3 (A), the frames #1 through #4 are in turn written in the memory device 8, and the writing is stopped for a time period $(t_3 - t_1)$, and the frames #3 and #4 are again written. At the same time, as shown in Fig. 3 (B), the frames #3 through #4 are in turn read out in succession, and the frames #3 and #4 are again read out in succession. So far, the reproduction of a still picture in the case where a memory device having a capacity for recording the video signal corresponding to two frames is utilized as the memory device 8.

Referring to Figs. 4 through 6, the present invention will be further explained by way of the example, in which a memory device having a memory capacity for recording the video signal corresponding to 1 field is utilized as the memory device 8.

In Fig. 4, the record disk 1, the spindle motor 2, the pickup device 3, the signal playback circuit 4, the focus servo circuit 5, the CCD 6, the tracking servo circuit 7, the memory device 8, the synchronizing signal separator 18, the phase comparator 19, the reference oscillator 20, the CCD servo amplifier 21, the VCO 22, and the spindle servo amplifier 23 are arranged and connected in the same manner as in the previous case which has been explained with reference to Fig. 1.

However, the spindle motor 2 used in this example incorporates a pulse generator which produces a pulse signal (one revolution pulse) every one revolution of its shaft. This pulse generator, for example, has a construction including a disk with a slit in its periphery and is fixed on the shaft of the spindle motor 2. By irradiating a light beam on the periphery of the disk with a slit, and detecting a light passed through the slit by a photo sensing element, the one revolution pulse signal can be generated. The one revolution pulse signal generated by the pulse generator connected to the spindle motor 2 is supplied to a system controller 30. The system controller 30 also receives the vertical synchronizing signal and address data supplied from the synchronizing signal separator 18, and various commands and data supplied in accordance with key operations of an operation part 31. By the address data supplied through the synchronizing signal separator 18, the system controller 30 determines the position of the information reading point in a radial direction of the record disk 1. The system controller 30, for example, includes a microcomputer which comprises a processor, a ROM, a RAM. In the system controller 30, the processor issues the FWD command, the REV command and the jump command to the tracking servo circuit 7, and the date indicative of the number of recording tracks for the track jump operation, and the write command to the memory device 8 in accordance with a program which is previously stored in the ROM. Further, the radix notation control circuit 17 is construced to generate a control signal corresponding to the number of the recording tracks indicated by the data from the system controller 30. In the memory device 8, the output signal of the CCD 6 is supplied to an A/D converter 32. The A/D converter 32 performs the sampling of the output data of the CCD 6, in accordance with a sampling pulse signal having a predetermined frequency, and converts the sampled value to digital data. The output data of the A/D converter 32 is supplied to a memory 33. The address control and the mode control of the memory 33 are performed by a memory control circuit 34. The memory control circuit 34 is constructed to perform the address control and the mode control so that data stored in each address of the memory 33 are in turn read out from a lead address, and new data are in turn written into each address starting from the lead address in accordance with the write command from the system controller 30. The data read from the memory 33 is converted into the analog signal at a D/A converter 35, to reproduce the video signal.

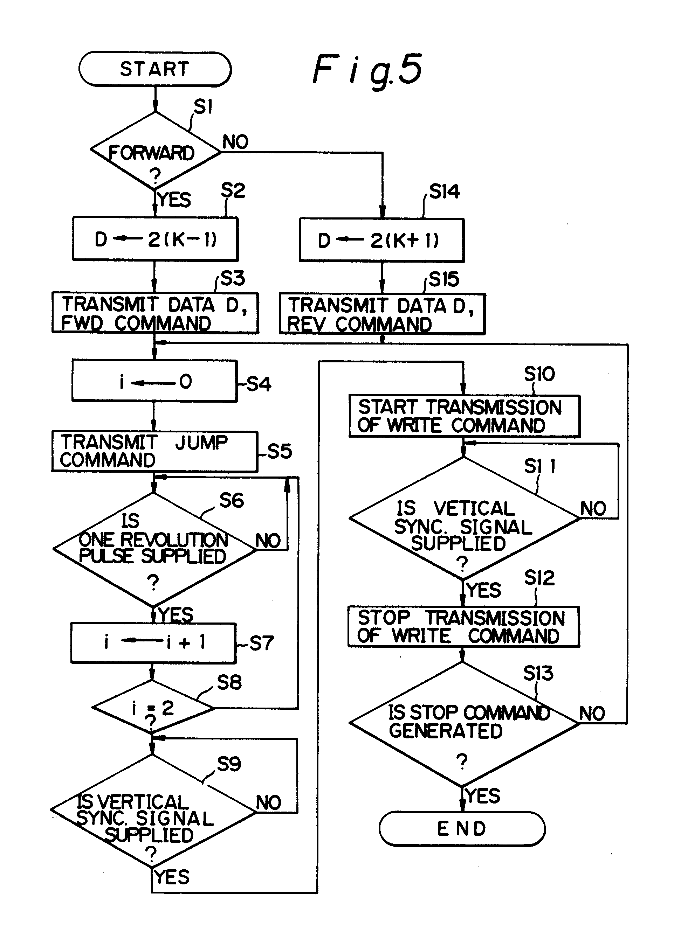

With the above-explained construction, the processor of the system controller 30 operates in a manner which will be explained with reference to the flowchart of Fig. 5.

During the execution of operations or a main routine, if a K (K being a natural number) times fast speed playback is commanded by a key operation of the operation part 31 by a user, the operation of the processor proceeds to a step $S_1$ for detecting as to whether or not the direction of the playback is forward direction. If the direction of the playback is detected to be the forward direction at the step $S_1$, the program proceeds to a step $S_2$ in which a number obtained by subtracting 1 from K is multiplied by 2, and a value obtained by the multiplication is issued as a data D indicative of the number of tracks for the track jump operation. The value 2 used in the step $S_2$ may be varied by the operation of the system controller 30 so that it varies depending on the position of the information reading point in the radial direction of the recording disk. Then in a step $S_3$, the data D indicative of the number of the recording tracks and the FWD command are transmitted to the tracking servo circuit 7. Then, the program proceeds to a step $S_4$ in which data i to be stored in a predetermined address of the RAM is made equal to 0. Then the processor supplies the jump command to the tracking servo circuit 7, at a step $S_5$. Subsequently, at a step $S_6$, whether or not the one revolution pulse is generated from the spindle motor 2 is detected. If it is determined that the one revolution pulse is not produced at the step $S_6$, the processor repeatedly performs the operation of the step $S_6$, and program proceeds to a step $S_7$ in which 1 is added to the data i, only when the generation of the one revolution pulse is detected at the step $S_6$.

Then, the program proceeds to a step $S_8$ in which it is detected whether or not the data i is equal to 2. If it is detected that the data i is not equal to 2 at the step $S_8$, the program again goes to the step $S_6$. When it is detected that the data i is equal to 2 at the step $S_8$, program proceeds to a step $S_9$ in which it is detected whether or not the vertical synchronizing signal is generated from the synchronizing signal separator 18. If it is detected that the vertical synchronizing signal is not generated by the synchronizing signal separator 18, the processor executes the operation of the step $S_9$ repeatedly, and program proceeds to a step $S_{10}$ at which the transmission of the write command is started, only when it is detected that the vertical synchronizing signal is generated by the synchronizing signal separator 18. Then, the program proceeds to a step $S_{11}$, at which it is detected whether or not the vertical synchronizing signal is generated from the synchronizing signal separator 18. If it is detected, at the step $S_{11}$ that the vertical synchronizing signal is not supplied from the synchronizing signal separator 18, the processor repeatedly performs the operation of the step $S_{11}$, and the program proceeds to a step $S_{12}$ at which the transmission of the write command is stopped, only when it is determined at the step $S_{11}$ that the vertical synchronizing signal is supplied from the synchronizing signal separator 18. Then, the program proceeds to a step $S_{13}$, at which it is detected whether or not a stop command is generated by a key operation of the operation part 31. If it is detected at the step $S_{13}$ that the stop command is not generated, the program goes to the step $S_4$ again. If, on the other hand, the stop command is generated at the step $S_{13}$, processor restarts the operation of the routine which was excecuted until immediately before the program proceeds to the step $S_1$.

Further, if it is detected at the step $S_1$ that the direction of the playback is not the forward direction, the program proceeds to a step $S_{14}$ at which 1 is added to K, and a result is multiplied by 2, and a value obtained by the multiplication is issued as the data D indicative of the number of tracks for the track jump operation. The value 2 used in the step $S_2$ may be varied by the operation of the system controller 30 so that it varies depending on the position of the information reading point in the radial direction of the recording disk. Then the program proceeds to a step $S_{15}$ at which the data D indicative of the number of the recording tracks and the REV command is transmitted to the tracking servo circuit 7, and the program proceeds to the step $S_4$.

In the steps 9 through 12 of the above explained operation, the track jump operation is started after the video signals $f_1$, $f_2$, and $f_3$ corresponding to one field respectively are written, as illustrated in Fig. 6. The time base error is present for the time period $t_2$ after the start of each of the track jump operation. Further, after a tack jump operation, the next track jump operation will not be started until two one revolution pulses, which are generated at times indicated by the mark $\triangle$ in Fig. 6, are detected by the operation of the steps $S_6$ through $S_8$, and the reading of the video signal corresponding to 1 field from the record disk and the writing of the video signal into the memory are completed.

In order to perform a K times fast speed playback operation in the forward direction, it is necessary that the information reading point is advanced by K - 1 tracks by the track jump operation while one revolution of the record disk occurs. On the other hand, in order to perform a K times fast speed playback operation in the reverse direction, it is necessaty that the information reading point is moved back by K + 1 tracks by the track jump operation while one revolution of the recording disk occurs.

In the case of the CLV type video disks, the innermost part of the recording track contains the video signal of slightly more than two fields in each circumpherential section. On the other hand, the time $t_2$ required for the time base servo circuit to be stabilized after a track jump operation has a value of almost 10ms. Therefore, if the track jump operation is performed in the innermost part of the CLV type recording disk, there is a possibility that the video signal corresponding to 1 field without time base error can not be obtained within the time period of one revolution of the recording disk after the start of the track jump operation.

However, in the case of the system of Fig. 4, after the start of one track jump operation, the next track jump operation will not be started until the video signal corresponding to one field is obtained after the one revolution pulse signal is supplied twice. Further, the video signal corresponding to one field obtained after the generation of two one revolution signals is stored in the memory. Therefore, the video signal corresponding to one field without the time base error can be obtained, and the video signal without time base error having the length of one field is written in the memory. Thus, sufficiently good playback pictures will be obtained also in the case of the K-times fast speed playback operation.

In addition, under this condition, the track jump operation is started every two revolutions of the record disk 1. Thefore, the interval between the track jump operation becomes long. However, since the distance travelled by the informaton reading point of the pickup device 3 by one track jump operation is doubled, the number of recording tracks per revolution of the recording disk by the track jump operation satisfies the condition for the K-times fast speed playback operation.

Above, the present invention has been described by way of the examples of the playback of a still picture by using memory device 8 having a recording capacity for storing the video signal of two frames, and of the playback of K-times fast speed with the memory device 8 having a recording capacity for storing the video signal of 1 field. However, it should be appreciated that the above examples are not limitative, and the present invention is applicable to both of the playback of a still picture and the K-times fast speed playback with the memory device 8 having any memory capacity.

It will be appreciated from the foregoing, that, according to the present invention, the operation of the time base servo system is stabilized before the information to be recorded in the memory is picked up after a track jump operation. Therefore, the error time base is eliminated from the playback video signal, and it becomes unnecessary to provide a separate time base servo circuit. Thus, a video signal having a stable time base is obtained from the memory, and the operation of special playback modes can be performed very stably.

**Claims**

1. A method for playing back information recorded on a record disk (1) on which recording is performed while the linear velocity is made almost constant over the recording area of the record disk (1), said method using a pickup device (3) having an information reading point and a memory device (8) having a memory capacity for recording information corresponding to at least one field of a video signal, **characterized** by the following steps:
   moving said information reading point of said pickup device (3) by a track jump operation in a radial direction of said record disk (1) repeatedly at intervals of N times of rotation of said record disk (1) across M recording tracks on said record disk (1), in response to a command of a special playback operation, with N being a natural number and M being a multiple of N including N;
   writing portions of information picked up by said pickup device (3) during periods between each of said track jump operations into said memory device (8), in the order of reading by said pickup device (3); and
   reading information stored in said memory device (8) in succession, to provide playback information for said special playback operation, wherein said step for moving said information reading point of said pickup device (3) is operative to move said information reading point by said track jump operation to a position of said recording track before a point from which reading of the video signal to be stored in the memory device (8) starts, by a predetermined distance corresponding to at least a time period required for stabilizing a time base error of said information caused by said track jump operation.

2. A method according to claim 1, further **characterized** by
   a step for determining a direction of said movement of said information reading point of said pickup device (3) in said radial direction of said record disk (1), according to said command for said special playback operation.

3. A method according to claim 1, **characterized** in that
   said special playback operation is a still picture playback operation, and in that said step for moving said information reading point of said pickup device (3) moves back said information reading point across N recording tracks by said track jump operation repeatedly at intervals of N times of rotation of said record disk (1).

4. A method according to claim 1,
**characterized** in that
said special playback operation is a K times fast speed forward playback operation, with K being a natural number, and in that said step for moving said information reading point of said pickup device (3) moves said information reading point in a forward direction across N (K + 1) recording tracks by said track jump operation repeatedly at intervals of N times of rotation of said record disk (1), and in that said reading step is performed while said portions of said information are written by said writing step.

5. A method according to claim 1,
**characterized** in that
said special playback operation is a K times fast speed reverse playback operation, with K being a natural number, and in that said step for moving said information reading point of said pickup device (3) moves said information reading point in a reverse direction across N (K - 1) recording tracks by said track jump operation repeatedly at intervals of N times of rotation of said record disk (1), and in that said reading step is performed while said portions of said information picked up by said pickup device (3) are written by said writing step.

6. A method according to claim 1,
**characterized** in that
said number N is varied according to said position of said information reading point of said pickup device (3) in said radial direction of said information record disk (1).

7. A system for playing back information recorded on a record disk (1) on which recording is performed while the linear velocity is made almost constant over the recording area of the record disk (1), said system using a pickup device (3) having an information reading point and a memory device (8) having a memory capacity for recording information corresponding to at least one field of a video signal,
**characterized** by
means (3, 7, 30, 31) for moving said information reading point of said pickup device (3) by a track jump operation in a radial direction of said record disk (1) repeatedly at intervals of N times of rotation of said recording disk (1) across M recording tracks on said record disk (1), in response to a command of a special playback operation, with N being a natural number and M being a multiple of N including N;
means (3, 7, 30, 31, 34) for writing portions of information picked up by said pickup device (3) during periods between each of said track jump operations, into said memory device (8), in the order of reading by said pickup device (3); and
means (30, 31, 34) for reading information stored in said memory device (8) in succession, to provide playback information for said special playback operation, wherein said means (3, 7, 30, 31) for moving said information reading point of said pickup device (3) moves said information reading point by said track jump operation to a position of said recording track before a point from which reading of the video signal to be stored in the memory device (8) starts, by a predetermined distance corresponding to at least a time period required for stabilizing a time base error of said information caused by said track jump operation.

8. A system according to claim 7,
**characterized** by
means (14) for determining a direction of said movement of said information reading point of said pickup device (3) in said radial direction of said record disk (1), according to said command for said special playback operation.

9. A system as set forth in claim 7,
**characterized** in that
said special playback operation is a still picture playback operation, and in that said means (3, 7, 30, 31) for moving said information reading point of said pickup device (3) move back said information reading point across N recording tracks by said track jump operation repeatedly at intervals of N times of rotation of said record disk (1).

10. A system according to claim 7,
**characterized** in that
said special playback operation is a K times fast speed forward playback operation with K being a natural number, and in that said means (3, 7, 30, 31) for moving said information reading point of said pickup device (3) move said information reading point in a forward direction across N (K + 1) recording tracks by said track jump operation repeatedly at intervals of N times of rotation of said record disk (1), and in that reading of information by said reading means (30, 31, 34) is performed while said portions of said information are written by said writing means (3, 7, 30, 31, 34).

11. A system according to claim 7, **characterized** in that said special playback operation is a K times fast speed reverse playback operation, with K being a natural number, and in that said means for moving said information reading point of said pickup device (3) moves said information reading point in a reverse direction across N (k - 1) recording tracks by said track jump operation repeatedly at intervals of N times of rotation of said record disk (1), and in that said reading of information by said reading means is performed while said portions of said information picked up by said pickup device (3) are written by said writing means (3, 7, 30, 31, 34).

12. A system according to claim 7, wherein said number N is varied according to said position of said information reading point of said pickup device (3) in said radial direction of said information record disk (1).

**Patentansprüche**

1. Verfahren zum Wiedergeben von auf einer Aufzeichnungsplatte (1) aufgezeichneter Information, an der die Aufzeichnung ausgeführt wird, während die Lineargeschwindigkeitüber den Aufzeichnungsbereich der Aufzeichnungsplatte (1) fast konstant gemacht wird, wobei das Verfahren ein Aufnehmergerät (3) benutzt mit einem Informationsablesepunkt und einem Speichergerät (8) mit einer Speicherkapazität zum Aufzeichnen von Information, die mindestens einem Feld eines Videosignals entspricht, **gekennzeichnet** durch die folgenden Schritte: der Informationslesepunkt des Aufnehmergeräts (3) wird durch einen Spursprungbetrieb wiederholt in einer Radialrichtung der Aufzeichnungsplatte (1) mit Intervallen von N mal der Umdrehung der Aufzeichnungsplatte (1) über M Aufzeichnungsspuren an der Aufzeichnungsplatte (1) bewegt in Reaktion auf einen Befehl eines speziellen Wiedergabebetriebes, wobei N eine natürliche Zahl und M ein Vielfaches von N, einschließlich N, ist; es wird durch das Aufnehmergerät (3) während Zeiträumen zwischen jedem Spursprungbetrieb aufgenommene Information in das Speichergerät (8) in der Reihenfolge des Lesens durch das Aufnehmergerät (3) eingeschrieben; und in dem Speichergerät (8) gespeicherte Information wird der Reihe nach ausgelesen, um Wiedergabeinformation für den speziellen Wiedergabebetrieb zu schaffen, wobei bei der Bewegung des Informationslesepunkts des Aufnehmergeräts (3) die Bewegung des Informationslesepunkts durch den Spursprungbetrieb zu einer Position der Aufzeichnungsspur vor einem Punkt bewirkt wird, von dem das Ablesen des in das Speichregerät (8) einzuspeichernden Videosignals beginnt, mit einem vorbestimmten Abstand, der mindestens einer Zeitlänge entspricht, die zum Stabilisieren eines durch den Spursprungbetrieb erzeugten Zeitbasisfehlers der Information erforderlich ist .

2. Verfahren nach Anspruch 1, weiter **gekennzeichnet** durch einen Schritt zum Bestimmen einer Bewegungsrichtung des Informationslesepunkts des Aufnehmergeräts (3) in der Radialrichtung der Aufzeichnungsplatte (1) entsprechend dem Befehl für den speziellen Wiedergabebetrieb.

3. Verfahren nach Anspruch 1, dadurch **gekennzeichnet,** daß der spezielle Wiedergabebetrieb ein Standbild-Wiedergabebetrieb ist, und daß der Schritt zum Bewegen des Informationslesepunkts des Aufnehmergeräts (3) den Informationslesepunkt wiederholt um N Aufzeichnungsspuren durch den Spursprungbetrieb zurückbewegt in Intervallen vom N-fachen der Umdrehung der Aufzeichnungsplatte (1).

4. Verfahren nach Anspruch 1, dadurch **gekennzeichnet,** daß der spezielle Wiedergabebetrieb ein K-facher Zeitraffer-Vorwärtswiedergabebetrieb ist, wobei K eine natürliche Zahl ist, und daß der Schritt für das Bewegen des Informationslesepunkts des Aufnehmergeräts (3) den Informationslesepunkt wiederholt mit Intervallen von N Umdrehungen der Aufzeichnungsplatte in einer Vorwärtsrichtung über N (K + 1) Aufzeichnungsspuren bewegt und daß das Auslesen ausgeführt wird, während die Abschnitte der Information durch den Einschreibeschritt eingeschrieben werden.

5. Verfahren nach Anspruch 1, dadurch **gekennzeichnet,** daß der spezielle Wiedergabebetrieb ein K-facher Zeitraffer-Rückwärtswiedergabebetrieb ist, wobei K eine natürliche Zahl ist, und daß der Schritt für das Bewegen des Informationslesepunkts des Aufnehmergeräts (3) den Informationslesepunkt in einer Rückwärtsrichtung wiederholt mit Intervallen von dem N-fachen der Umdrehung der Aufzeichnungsplatte (1) über N (K-1) Aufzeichnungsspuren durch den Spursprungbetrieb bewegt und daß der Ausleseschritt ausgeführt wird, während die Abschnitte der durch das Aufnehmergerät (3) aufgenommenen Information durch den Einschreibeschritt eingeschrieben werden.

6. Verfahren nach Anspruch 1, dadurch **gekennzeichnet,** daß die Anzahl N entsprechend der Position des Informationslesepunkts des Aufnehmergeräts (3) in der Radialrichtung der Informationsaufzeichnungsplatte verändert wird.

7. System zum Wiedergeben von auf einer Aufzeichnungsplatte (1) aufgezeichneter Information, an der die Aufzeichnung ausgeführt wird, während die Lineargeschwindigkeit über den Aufzeichnungsbereich der Aufzeichnungsplatte (1) fast konstant gemacht wird, wobei das Verfahren ein Aufnehmergerät (3) benutzt mit einem Informationsablesepunkt und einem Speichergerät (8) mit einer Speicherkapazität zum Aufzeichnen von Information, die mindestens einem Feld eines Videosignals entspricht, **gekennzeichnet** durch
Mittel (3, 7, 30, 31) zum wiederholten Bewegen des Informationslesepunkts des Aufnehmergeräts durch einen Spursprungbetrieb in einer radialen Richtung der Aufzeichnungsplatte (1) in Abständen von dem N-fachen der Drehung der Aufzeichnungsplatte (1) über M Aufzeichnungsspuren an der Aufzeichnungsplatte (1) in Abhängigkeit von einem Befehl für einen speziellen Wiedergabebetrieb, wobei N eine natürliche Zahl und M ein Vielfaches von N, einschließlich N, ist;
Mittel (3, 7, 30, 31, 34) zum Einschreiben von Abschnitten von durch das Aufnehmergerät (3) während Zeiträumen zwischen jedem Spursprungbetrieb aufgenommener Information in das Speichergerät (8) in der Reihenfolge des Auslesens durch das Aufnehmergerät (3); und
Mittel (30, 31, 34) zum Lesen von in dem Speichergerät (8) gespeicherter Information der Reihe nach, um Wiedergabeinformation für den speziellen Wiedergabebetrieb zu schaffen, wobei das Mittel (3, 7, 30, 31) zum Bewegen des Informationslesepunkts des Aufnehmergeräts (3) den Informationslesepunkt durch den Spursprungbetrieb zu einer Position der Aufzeichnungsspur vor einer Stelle bewegt, von der das Lesen des in das Speichergerät (8) einzuspeichernden Videosignals beginnt, um einen vorbestimmten Abstand entsprechend mindestens einer Zeitlänge, die zum Stabilisieren eines durch den Spursprungbetrieb verursachten Zeitbasisfehlers der Information erforderlich ist.

8. System nach Anspruch 7, **gekennzeichnet** durch
Mittel (14) zum Bestimmen einer Richtung der Bewegung des Informationslesepunkts des Aufnehmergeräts (3) in der Radialrichtung der Aufzeichnungsplatte (1) entsprechend dem Befehl für den speziellen Wiedergabebetrieb.

9. System nach Anspruch 7, dadurch **gekennzeichnet,** daß der spezielle Wiedergabebetrieb ein Standbild-Wiedergabebetrieb ist und daß das Mittel (3, 7, 30, 31) zum Bewegen des Informationslesepunkts des Aufnehmergeräts (3) wiederholt den Informationslesepunkt durch den Spursprungbetrieb in Abständen von dem N-fachen der Umdrehung der Aufzeichnungsplatte (1) über N Aufzeichnungsspuren zurückbewegt.

10. System nach Anspruch 7, dadurch **gekennzeichnet,** daß der spezielle Wiedergabebetrieb ein K-facher Zeitraffer-Vorwärtswiedergabebetrieb ist, wobei K eine natürliche Zahl ist, und daß das Mittel (3, 7, 30, 31) zum Bewegen des Informationslesepunkts des Aufnehmergeräts (3) den Informationslesepunkt wiederholt durch den Spursprungbetrieb mit Abständen von N Umdrehungen der Aufzeichnungsplatte (1) in einer Vorwärtsrichtung über N (K + 1) Aufzeichnungsspuren bewegt, und daß das Auslesen von Information durch das Lesemittel (30, 31, 34) ausgeführt wird, während Abschnitte der Information durch das Schreibmittel (3, 7, 30, 31, 34) eingeschrieben werden.

11. System nach Anspruch 7, dadurch **gekennzeichnet,** daß der spezielle Wiedergabebetrieb ein K-facher Zeitraffer-Rückwärtswiedergabebetrieb ist, wobei K eine natürliche Zahl ist, und daß das Mittel zum Bewegen des Informationslesepunkts des Aufnehmergeräts (3) den Informationslesepunkt wiederholt mit Abständen vom N-fachen der Umdrehung der Aufzeichnungsplatte (1) in einer Rückwärtsrichtung über N (K-1) Aufzeichnungsspuren durch den Spursprungbetrieb bewegt, und daß das Auslesen von Information durch das Lesemittel ausgeführt wird, während Abschnitte der durch das Aufnehmergerät (3) aufgenommenen Information durch das Schreibmittel (3, 7, 30, 31, 34) eingeschrieben werden.

12. System nach Anspruch 7, bei dem die Anzahl N entsprechend der Position des Informationslesepunkts des Aufnehmergeräts (3) in der Radialrichtung der Informations-Aufzeichnungsplatte (1) verändert wird.

**Revendications**

1. Procédé pour la reproduction de données enregistrées sur un disque mémoire (1) sur lequel l'enregistrement est effectué tandis que la vitesse linéaire est rendue pratiquement constante dans la zone d'enregistrement du disque mémoire (1), ledit procédé utilisant un dispositif de lecture (3) comprenant un point de lecture de données et un dispositif à mémoire (8) qui présente une capacité de mémoire pour enregistrer des données correspondant à au moins un champ d'un signal vidéo, caractérisé par les étapes suivantes:
on déplace ledit point de lecture de données dudit dispositif de lecture (3) par une opération de saut de piste dans une direction radiale dudit disque mémoire (1) de manière répétée à des intervalles de N rotations dudit disque mémoire (1) et sur M pistes d'enregistrement dudit disque mémoire (1), en réponse à un ordre d'une opération spéciale de reproduction, N étant un nombre entier naturel et M étant un multiple de N, y compris N;
on écrit dans ledit dispositif à mémoire (8) des parties des informations lues par ledit dispositif de lecture (3) pendant des périodes entre chacune des opérations de saut de piste, dans l'ordre de lecture par ledit dispositif de lecture (3); et
on lit en succession les données mémorisées dans ledit dispositif à mémoire (8), afin de fournir des informations de reproduction pour ladite opération spéciale de reproduction,
dans lequel ladite étape consistant à déplacer ledit point de lecture de données dudit dispositif de lecture (3) a pour effet de déplacer ledit point de lecture de données par ladite opération de saut de piste à une position de ladite piste d'enregistrement avant un point à partir duquel débute la lecture du signal vidéo à mémoriser dans le dispositif à mémoire (8), à une distance prédéterminée qui correspond au moins à un délai nécessaire pour stabiliser une erreur de base de temps desdites données provoquée par ladite opération de saut de piste.

2. Procédé selon la revendication 1, caractérisé en ce qu'il comprend en outre une étape consistant à déterminer une direction de déplacement dudit point de lecture de données dudit dispositif de lecture (3) dans ladite direction radiale dudit disque mémoire (1), en fonction dudit ordre pour ladite opération spéciale de reproduction.

3. Procédé selon la revendication 1, caractérisé en ce que ladite opération spéciale de reproduction est une opération de lecture avec arrêt sur l'image, et en ce que ladite étape de déplacement dudit point de lecture de données dudit dispositif de lecture (3) déplace ledit point de lecture de données en recul sur N pistes d'enregistrement par ladite opération de saut de piste, à des intervalles de N rotations dudit disque mémoire (1).

4. Procédé selon la revendication 1, caractérisé en ce que ladite opération spéciale de reproduction est une opération de reproduction en marche avant à haute vitesse suivant un multiple K, celui-ci étant un nombre entier naturel, et en ce que ladite étape consistant à déplacer ledit point de lecture de données dudit dispositif de lecture (3) déplace ledit point de lecture de données en direction d'avance sur $N(K+1)$ pistes d'enregistrement par ladite opération de saut de piste, de manière répétée à des intervalles de N rotations dudit disque mémoire (1), et en ce que ladite étape de lecture est effectuée tandis que lesdites parties desdites données sont écrites par ladite étape d'écriture.

5. Procédé selon la revendication 1, caractérisé en ce que ladite opération spéciale de reproduction est une opération de reproduction en marche arrière à haute vitesse suivant un multiple K, celui-ci étant un nombre entier naturel, et en ce que ladite étape consistant à déplacer ledit point de lecture de données dudit dispositif de lecture (3) déplace ledit point de lecture de données en direction de recul sur $N(K-1)$ pistes d'enregistrement par ladite opération de saut de piste, de manière répétée à des intervalles de N rotations dudit disque mémoire (1), et en ce que ladite étape de lecture est effectuée tandis que lesdites parties desdites données sont écrites par ladite étape d'écriture.

6. Procédé selon la revendication 1, caractérisé en ce que l'on fait varier ledit nombre N en fonction de la position dudit point de lecture de données dudit dispositif de lecture (3) dans ladite direction radiale dudit disque mémoire de données (1).

7. Appareil pour la reproduction de données enregistrées sur un disque mémoire (1) sur lequel l'enregistrement est effectué tandis que la vitesse linéaire est rendue pratiquement constante dans la zone d'enregistrement du disque mémoire (1), ledit appareil utilisant un dispositif de lecture (3) comprenant un point de lecture de données et un dispositif à mémoire (8) qui présente une capacité de mémoire pour enregistrer des données correspondant à au moins un champ d'un signal vidéo, caractérisé en ce qu'il comprend:

des moyens (3, 7, 30, 31) destinés à déplacer ledit point de lecture de données dudit dispositif de lecture (3) par une opération de saut de piste dans une direction radiale dudit disque mémoire (1) de manière répétée à des intervalles de N rotations dudit disque mémoire (1) et sur M pistes d'enregistrement dudit disque mémoire (1), en réponse à un ordre d'une opération spéciale de reproduction, N étant un nombre entier naturel et M étant un multiple de N, y compris N;

des moyens (3, 7, 30, 31, 34) destinés à écrire dans ledit dispositif à mémoire (8) des parties des informations lues par ledit dispositif de lecture (3) pendant des périodes entre chacune des opérations de saut de piste, dans l'ordre de lecture par ledit dispositif de lecture (3); et

des moyens (30, 31, 34) destinés à lire en succession les données mémorisées dans ledit dispositif à mémoire (8), afin de fournir des informations de reproduction pour ladite opération spéciale de reproduction,

dans lequel lesdits moyens (3, 7, 30, 31) destinés à déplacer ledit point de lecture de données dudit dispositif de lecture (3) déplacent ledit point de lecture de données par ladite opération de saut de piste à une position de ladite piste d'enregistrement avant un point à partir duquel débute la lecture du signal vidéo à mémoriser dans le dispositif à mémoire (8), à une distance prédéterminée qui correspond au moins à un délai nécessaire pour stabiliser une erreur de base de temps desdites données provoquée par ladite opération de saut de piste.

8. Appareil selon la revendication 7, caractérisé en ce qu'il comprend en outre des moyens (14) destinés à déterminer une direction de déplacement dudit point de lecture de données dudit dispositif de lecture (3) dans ladite direction radiale dudit disque mémoire (1), en fonction dudit ordre pour ladite opération spéciale de reproduction.

9. Appareil selon la revendication 7, caractérisé en ce que ladite opération spéciale de reproduction est une opération de lecture avec arrêt sur l'image, et en ce que lesdits moyens (3, 7, 30, 31) destinés à déplacer ledit point de lecture de données dudit dispositif de lecture (3) déplacent ledit point de lecture de données en recul sur N pistes d'enregistrement par ladite opération de saut de piste, à des intervalles de N rotations dudit disque mémoire (1).

10. Appareil selon la revendication 7, caractérisé en ce que ladite opération spéciale de reproduction est une opération de reproduction en marche avant à haute vitesse suivant un multiple K, celui-ci étant un nombre entier naturel, et en ce que lesdits moyens (3, 7, 30, 31) destinés à déplacer ledit point de lecture de données dudit dispositif de lecture (3) déplacent ledit point de lecture de données en direction d'avance sur N(K + 1) pistes d'enregistrement par ladite opération de saut de piste, de manière répétée à des intervalles de N rotations dudit disque mémoire (1), et en ce que la lecture de données est effectuée par lesdits moyens de lecture (30, 31, 34) tandis que lesdites parties desdites données sont écrites par lesdits moyens d'écriture (3, 7, 30, 31, 34).

11. Appareil selon la revendication 7, caractérisé en ce que ladite opération spéciale de reproduction est une opération de reproduction en marche arrière à haute vitesse suivant un multiple K, celui-ci étant un nombre entier naturel, et en ce que lesdits moyens destinés à déplacer ledit point de lecture de données dudit dispositif de lecture (3) déplacent ledit point de lecture de données en direction de recul sur N(K-1) pistes d'enregistrement par ladite opération de saut de piste, de manière répétée à des intervalles de N rotations dudit disque mémoire (1), et en ce que ladite lecture de données est effectuée par lesdits moyens de lecture tandis que lesdites parties desdites données lues par ledit dispositif de lecture (3) sont écrites par lesdits moyens d'écriture (3, 7, 30, 31, 34).

12. Appareil selon la revendication 7, caractérisé en ce que l'on fait varier ledit nombre N en fonction de la position dudit point de lecture de données dudit dispositif de lecture (3) dans ladite direction radiale dudit disque mémoire de données (1).

# Fig. 1

EP 0 236 944 B1

Fig.2

Fig.3

Fig.4

# Fig. 5

```
         ┌─────────────┐
         │    START    │
         └──────┬──────┘
                │ S1
          ╱─────┴─────╲         NO
         ╱   FORWARD    ╲──────────────────┐
         ╲      ?       ╱                   │
          ╲─────┬─────╱                     │
                │ YES  S2                    │ S14
         ┌──────┴──────┐              ┌──────┴──────┐
         │ D ← 2(K-1)  │              │ D ← 2(K+1)  │
         └──────┬──────┘              └──────┬──────┘
                │ S3                          │ S15
    ┌───────────┴──────────┐      ┌───────────┴──────────┐
    │ TRANSMIT DATA D,     │      │ TRANSMIT DATA D,     │
    │ FWD COMMAND          │      │ REV COMMAND          │
    └───────────┬──────────┘      └───────────┬──────────┘
```

TRANSMIT DATA D, FWD COMMAND — S3

TRANSMIT DATA D, REV COMMAND — S15

i ← 0 — S4

START TRANSMISSION OF WRITE COMMAND — S10

TRANSMIT JUMP COMMAND — S5

IS ONE REVOLUTION PULSE SUPPLIED ? — S6 — NO

IS VETICAL SYNC. SIGNAL SUPPLIED ? — S11 — NO

i ← i + 1 — S7

STOP TRANSMISSION OF WRITE COMMAND — S12

i = 2 ? — S8

IS STOP COMMAND GENERATED ? — S13 — NO

IS VERTICAL SYNC. SIGNAL SUPPLIED ? — S9 — NO

YES

END

# Fig.6

# Fig.7

(A)                (B)                (C)